# EUROPEAN PATENT APPLICATION

(11) **EP 4 717 660 A1**
(43) Date of publication of application: **01.04.2026**
(21) Application number: 25383010.3
(22) Date of filing: 22.09.2025
(51) Int. Cl.: B66C 23/32, B66C 23/18, B66C 23/20, F03D 80/50

(54) **CLIMBING STRUCTURE FOR WIND TURBINES**

(30) Priority: 23.09.2024 EP 24383020
(71) Applicant: Kimua Engineering, S.L., 20490 Lizartza (ES)
(72) Inventor: ALZATE URETAVIZCAYA, Ivan, 20492 Berastegi (ES); ZUBELZU LOYARTE, Begoña, 20400 Tolosa (ES)
(74) Representative: Galbaian S.Coop.

(57) **Abstract**

A climbing structure (100) comprising at least two holding devices (1) for securing the structure (100) to a tower (201) of a wind turbine. Each holding device (1) comprises three pushers, a central one (5.3) and side pushers (5.1, 5.2), with at least a respective supporting surface (3.1, 3.2, 3.3), the pushers being configured to press the tower (201) at a certain height on three angularly equally distributed areas. Each holding device (1) also comprises a main body (4) and two side arms (6.1, 6.2) cooperating with said main body (4) and comprising a respective side pusher (5.1, 5.2), the central pusher (5.3) being associated with the main body (4). Likewise, the main body (4) of each holding device (1) comprises two inclined side guide housings (8.1, 8.2), the central pusher (5.3) being arranged between both side arms (6.1, 6.2). Each holding device (1) comprises actuating means for moving the side arms (6.1, 6.2) with respect to the main body (4) guided in the corresponding side guide housing (8.1, 8.2), such that the respective holding device (1) can be coupled to towers (201) of different diameters.

## Description

### TECHNICAL FIELD

The present invention relates to climbing structures capable of climbing wind turbine towers.

### PRIOR ART

Structures capable of climbing wind turbine towers are known. These structures usually comprise a crane to lift large loads, which facilitates the assembly and maintenance work of the wind turbine. Such a crane, being arranged on a climbing structure, replaces traditional large cranes whose transport is very expensive. Climbing structures also usually comprise a number of holding devices capable of being secured to the outer surface of the tower.

Various systems to allow the climbing structure to be secured to the tower, usually cylindrical, of a wind turbine in order to climb up the tower are known. Some climbing structures comprise brackets which are anchored to locking points of the tower of the wind turbine. These locking points have to be pre-mounted on the tower, or the tower has to be manufactured with such locking points.

In other systems it is not necessary for the tower to include locking points. In said systems the holding devices comprise two parallel arms, one fixed and one movable, and each arm incorporates two or more pushers so that when the arms are approached to each other, the pushers, which are arranged faced, are pressed against the outer surface of the tower and the climbing structure is secured to the tower.

Other systems comprise clamps usually with two diametrically opposed pushers, which are pressed against the tower with articulated arms and/or straps.

Clamps with three pushers are also known. In this regard, ES2966566A1 describes a holding device for a structure capable of climbing the tower of a wind turbine. The structure comprises four holding devices arranged at different heights, each holding device comprising a clamp with three pushers, which embraces the tower by means of a set of grippers. The three pushers are pressed against the surface of the tower by means of the set of grippers and a strap.

On the other hand, JP2012092534 A describes a telescopic structure capable of holding on to the tower of a wind turbine as the tower grows, a crane being able to arrange at the top of the structure to allow locating the tower modules. The telescopic structure comprises several holding devices that are arranged at different heights. Each holding device comprises a first base assembly that allows removably holding the holding device to a module of the telescopic structure, and a second holding assembly, attached to the first base assembly, that allows holding the holding device to the wind turbine tower. The second holding assembly comprises three pushers, a central one and two lateral, with a plurality of supporting surfaces. The lateral pushers are arched arms, so that they embrace part of the tower of the wind turbine. One end of the lateral pusher is fixed to a corresponding end of the central pusher so that the lateral pusher can rotate with respect to the central pusher.

### DISCLOSURE OF THE INVENTION

The object of the invention is to provide a climbing structure, as defined in the claims.

The climbing structure of the invention comprises at least two holding devices for securing the structure to a tower of a wind turbine. Each holding device comprises three pushers, a central one and two side pushers, with at least a respective supporting surface, the pushers being configured to press the tower at a given height on three angularly equally distributed areas by means of the supporting surfaces. Each holding device also comprises a main body and two side arms cooperating with said main body and comprising a respective side pusher, the central pusher being associated with the main body. Likewise, the main body of each of the holding device comprises two inclined side guide housings, the central pusher being arranged between both side arms. Each holding device comprises actuating means for moving the side arms with respect to the main body guided in the corresponding side guide housings, such that the corresponding holding device can be coupled to towers of different diameters.

The climbing structure of the invention is attached to the wind turbine tower via the central and side pushers of the holding devices that press against the tower on three supporting areas equally distributed, , preventing the central and lateral pushers from ovalising the tower where the corresponding holding device is arranged. Likewise, the climbing structure of the invention can be easily adapted to different tower diameters, even to towers whose cross-section varies at different heights.

These and other advantages and features of the invention will become apparent in view of the figures and the detailed description of the invention.

### DESCRIPTION OF THE DRAWINGS

Figure 1 shows a perspective view of the climbing structure according to an embodiment of the invention, the climbing structure being secured to the tower of a wind turbine.
Figure 2 shows a plan view of one of the holding devices of the climbing structure of figure 1, which is in the locked position.
Figure 3A shows a side view of the climbing structure of figure 1 in a position of use.
Figure 3B shows a side view of the climbing structure of figure 1 in another position of use.
Figure 4 shows a perspective view of a detail of the climbing structure of figure 1.
Figure 5A shows a side view of the climbing structure according to another embodiment of the invention, in a position of use.
Figure 5B shows a detail of the climbing structure of figure 5A.
Figure 5C shows another detail, in perspective, of the climbing structure of figure 5A.
Figure 6 shows a plan view of one of the holding devices of the climbing structure of figure 5A in the locking position.

### DETAILED DISCLOSURE OF THE INVENTION

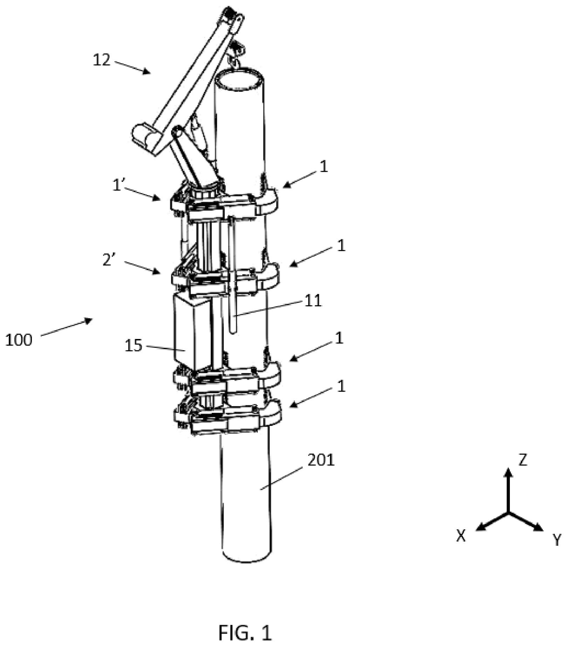

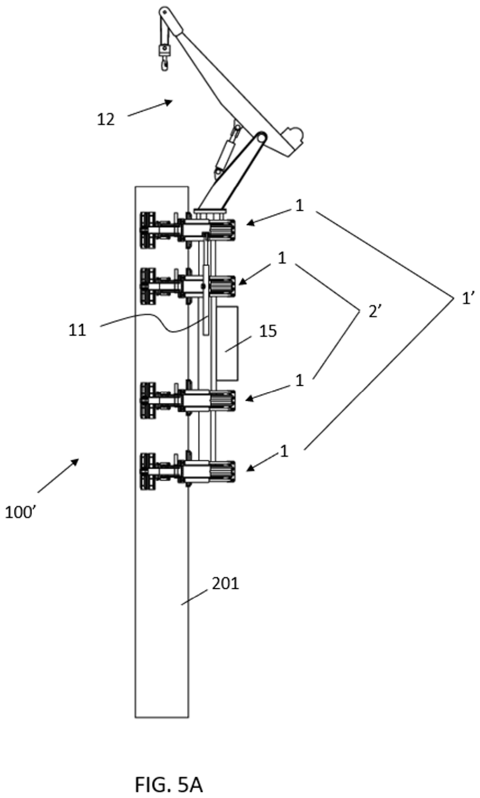

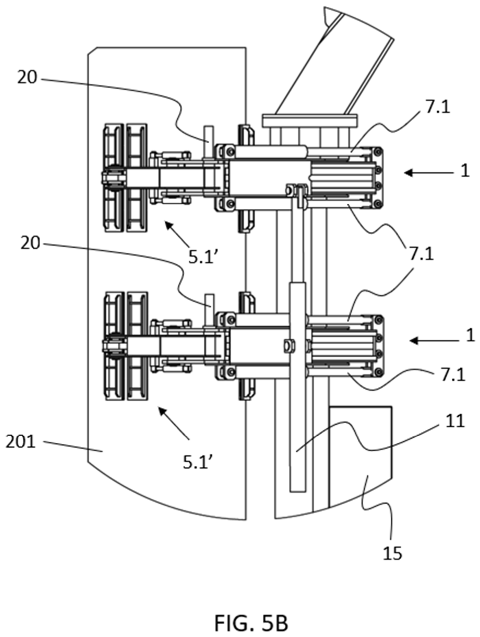

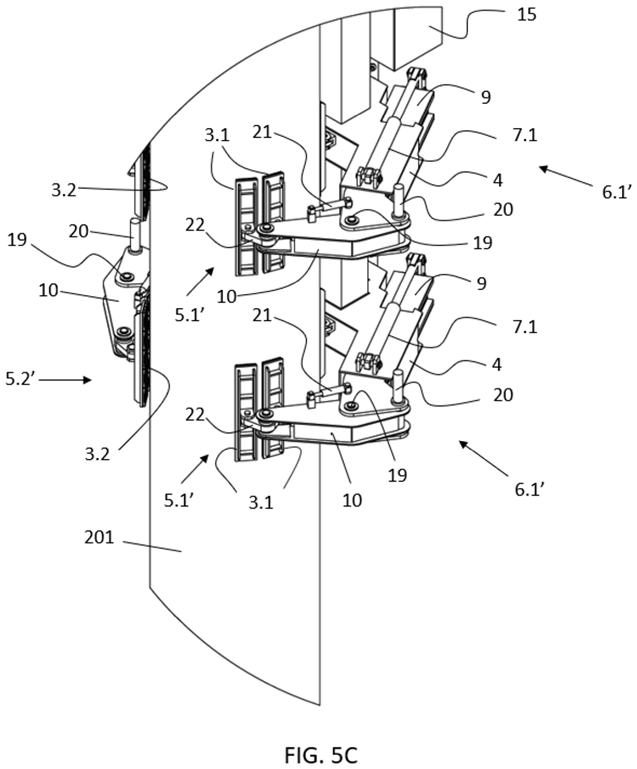

Figure 1 shows a perspective view of the climbing structure 100 in a position of use, according to an embodiment of the invention, and Figures 5A shows a side view of the climbing structure 100' according to another embodiment of the invention, also in a specific position of use.

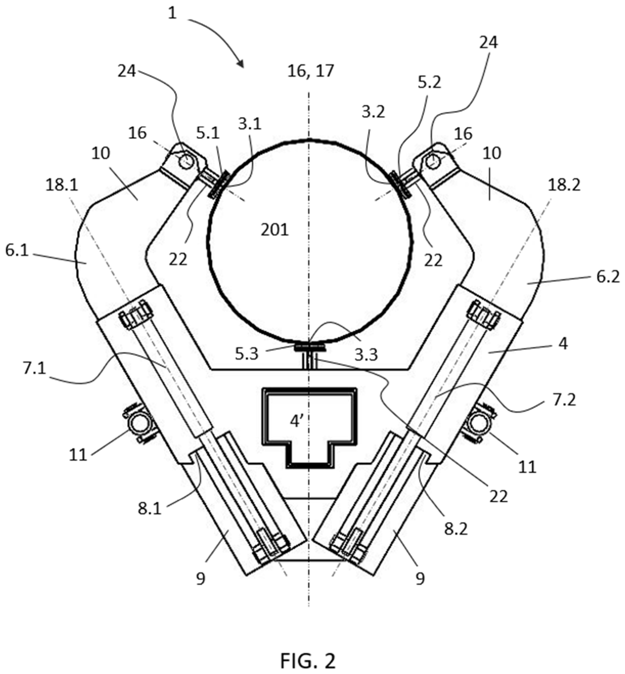

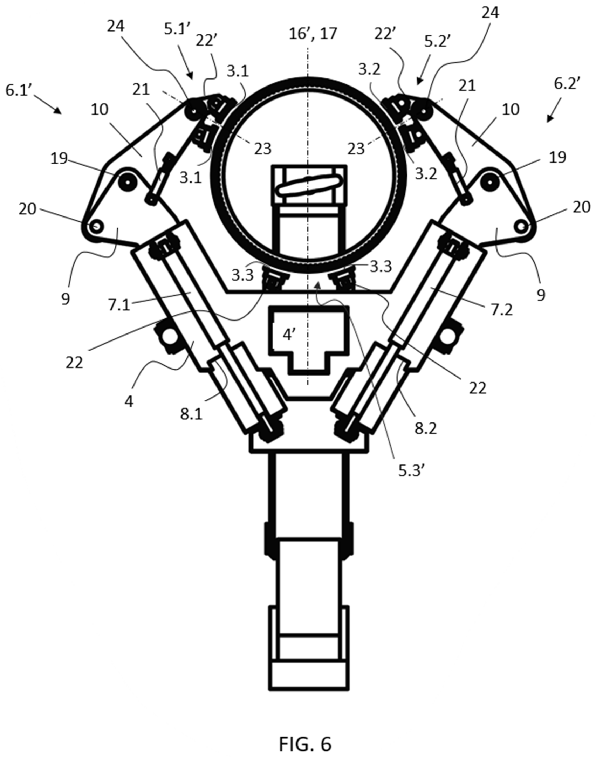

The climbing structure 100 and 100' of the invention comprises at least two holding devices 1 for securing the structure 100 or 100' to a tower 201 of a wind turbine, as shown schematically in the non-limiting examples of figure 1 and figure 5A. Each holding device 1 comprises three pushers, a central one and two side pushers, with at least a respective supporting surface 3.1, 3.2 and 3.3, the pushers being configured to press the tower 201 at a certain height (with respect to the ground) on three angularly equally distributed areas by means of the supporting surfaces, as can be seen for example in figure 2 or in figure 6.

In a locking position of the corresponding holding device 1 the supporting surfaces 3.1, 3.2 and 3.3 of the three pushers are in contact with the tower 201, so that when the climbing structure 100 or 100' is in use pressure is exerted against the outer surface of the tower 201 in an equally distributed manner, preventing the holding devices 1 from deforming the tower 201, for example by ovalising it.

Each holding device 1 also comprises a main body 4 and two side arms 6.1 and 6.2, or 6.1' and 6.2', cooperating with said main body 4 and comprising a respective side pusher 5.1, 5.2, 5.1', 5.2' as can be seen in figure 2 or in figure 6. However, the central pusher 5.3, 5.3' is preferably directly associated with the main body 4.

Likewise, the main body 4 of each holding device 1 comprises two inclined side guide housings 8.1 and 8.2, the central pusher 5.3, 5.3' being arranged between both side arms 6.1 and 6.2, or 6.1' and 6.2'. On the other hand, each holding device 1 also comprises actuating means for moving the side arms 6.1, 6.2, 6.1' and 6.2' with respect to the main body 4 guided in the corresponding side guide housings 8.1 and 8.2, such that the respective holding device 1 can be coupled to towers 201 of different diameters, thus facilitating that the same climbing structure 100 or 100' can be used on towers 201 with different diameters or, if the diameter of a tower 201 is not of constant section, can be easily adapted to changes in the section of the tower 201 as it climbs the tower 201. Each pusher, the central pusher 5.3, 5.3' and the side pushers 5.1, 5.2, 5.1' and 5.2', comprises at least a respective supporting surface 3.1, 3.2 and 3.3, as shown in the non-limiting example of figure 2 or of figure 6.

The actuation means of each holding device 1 are configured to move the corresponding side arms 6.1, 6.2, 6.1' and 6.2' independently, and thus also the side pushers 5.1, 5.2, 5.1' and 5.2', thus ensuring that each supporting surface 3.1, 3.2 and 3.3 exerts the necessary pressure to enable the assembly of the three supporting areas to be securely hold on to the tower 201 in the locked position.

In the preferred embodiment of the invention, the actuating means of each holding device 1 are configured to move the corresponding side arms 6.1 and 6.2 with respect to the respective main body 4, guided in the corresponding side guide housings 8.1 and 8.2, while maintaining the orientation of the side pushers 5.1 and 5.2 with respect to the central pusher 5.3, being able to move from the locked position to the unlocked position, thereby releasing the holding device 1 from the tower 201, from the unlocked position to the locked position, thereby securing the holding device 1 to the tower 201, or being able to adapt to different diameters of the tower 201 in the locked and/or unlocked position. In another embodiment of the invention, shown in Figures 5A to 6, the side arms 6.1' and 6.2', although they can be displaced with respect to the respective main body 4 (guided in the corresponding side guide housings 8.1 and 8.2), the side pushers 5.1' and 5.2' do not necessarily have to maintain their orientation with respect to the central pusher 5.3 while performing the movement of approaching to the tower 201 or moving away from the tower 201, as will be detailed below.

In the preferred embodiment of the invention, the central pusher 5.3 of each holding device 1 does not move with respect to the respective main body 4. However, in a variant of the invention the actuating means of each holding device 1 are also configured to move the corresponding central pusher 5.3 with respect to the respective main body 4, thereby making it easier to maintain the equally distribution of the three areas of the tower 201 associated with the supporting surfaces 3.1, 3.2 and 3.3. In this variant the actuating means of each holding device 1 are also configured to move both the side pushers 5.1 and 5.2 and the central pusher 5.3 independently, thus more easily ensuring that each supporting surface 3.1, 3.2 and 3.3 exert the necessary pressure to enable the set of all the supporting surfaces 3.1, 3.2 and 3.3 can be securely hold on to the tower 201 in the locked position and furthermore, enabling the holding device 1 to be more easily adjusted to changes in the cross-section of the tower 201.

In a variant of the invention the central pusher 5.3', which may or may not move relative to the corresponding main body 4, comprises a pusher assembly, preferably with two auxiliary pushers with the corresponding support surface 3.3, as shown in the non-limiting example of Figure 6. Likewise, optionally, the side pushers 5.1' and 5.2' may comprise a non-linear support body 22', preferably in the shape of an inverted U, said support body 22' being fixed to the corresponding side arm 6.1' or 6.2' so that it can oscillate, as will be detailed below. At each free end of the support body 22', there is a corresponding supporting surface 3.1 or 3.2, as can be seen, for example, in the non-limiting example of figure 6.

In an embodiment of the invention, in an unlocked position of the corresponding holding device 1 the supporting surfaces 3.1 and 3.2 associated with the side pushers 5.1, 5.2, 5.1' and 5.2' are not in contact with the tower 201, being able in this unlocked position to move the holding device 1 along the tower 201, i.e. along a longitudinal axis of the tower 201, said longitudinal axis being the axis along which the tower 201 extends from the ground and which is parallel to the vertical axis Z shown in figure 1. However, in the variant where the central pusher 5.3 or 5.3' of each holding device is also moved, in the unlocked position of the corresponding holding device 1 it is possible that none of the supporting surfaces 3.1, 3.2 and 3.3 is in contact with the tower 201, thus facilitating the corresponding holding device 1 to be moved along the tower 201.

The fact that the actuation means of each holding device 1 are configured to move both the side pushers 5.1, 5.2, 5.1' and 5.2' and the central pusher 5.3 independently facilitates positioning the corresponding supporting surfaces 3.1, 3.2 and 3.3 around the wind turbine tower 201 so that the climbing structure 100, 100' can start working, or to dismount it from the tower 201. In a non-limiting example, at the beginning of the process (in order to be able to place the climbing structure 100, 100' around a section of the wind turbine tower 201) and at the end of the process (in order to be able to dismantle the climbing structure 100, 100') the side pushers 5.1, 5.2, 5.1' and 5.2' could be moved to allow the passage of the maximum diameter of the tower 201, and if it would be necessary to adjust the climbing structure 100, 100' to ensure the equidistant distribution, the central pusher 5.3, 5.3' could also be moved.

In the non-limiting example of figure 2, the side arms 6.1 and 6.2 of each holding device 1 are arranged symmetrically with respect to a plane 17 comprising a longitudinal axis 16 of the central pusher 5.3 and the longitudinal axis of the tower 201. The longitudinal axis 16 of the central pusher 5.3 is aligned with a transverse axis of the tower 201 of the wind turbine, said transverse axis being perpendicular to the longitudinal axis of the tower 201 with respect to which the tower 201 extends. Likewise, in the preferred embodiment of the holding device 1 the main body 4 is symmetrical with respect to the plane 17.

In the embodiment of the example of figure 2, the central pusher 5.3 of each holding device 1 is arranged aligned with the corresponding axis 16. The side pushers 5.1 and 5.2 in the locked position are therefore arranged at 120° to the central pusher 5.3, as will be detailed further below, and the orientation of the side pushers 5.1 and 5.2 relative to the central pusher 5.3 is maintained even if the side arms 6.1 and 6.2 are displaced, as will be detailed further below, for example to unlock the corresponding holding device 1.

In the non-limiting example of figures 5A to 6, the supporting surfaces 3.3 of the push assembly of the central pusher 5.3' are arranged symmetrically with respect to a plane of symmetry 16', as shown in figure 6, which comprises the longitudinal axis of the tower 201 and a transverse axis of the tower 201, perpendicular to the longitudinal axis of the tower 201. The side arms 6.1' and 6.2' of each holding device 1 are also arranged symmetrically with respect to said plane 16'. Geometrically speaking, the geometry plane 16' of this embodiment is equivalent to plane 17 of the embodiment described above.

In a non-limiting example of the invention, the actuation means of each holding device 1 are configured to move the corresponding side pushers 5.1, 5.2, 5.1' and/or 5.2' by means of at least a respective linear actuator 7.1 and 7.2, said linear actuators 7.1 and 7.2 being preferably hydraulic cylinders, and more preferably double acting hydraulic cylinders. Likewise, in the variant where the central pusher 5.3 or 5.3' of each holding device 1 is also moved, the actuating means of each holding device 1 also comprise at least one linear actuator, not shown in the drawings, for moving the central pusher 5.3 or 5.3' with respect to the main body 4, said actuator preferably also being a hydraulic cylinder, and more preferably also a double-acting hydraulic cylinder.

Each linear actuator 7.1 and 7.2 comprises a fixed part and a movable part which moves relative to the fixed part. As shown in the non-limiting example of figure 2, a section of the fixed part of each linear actuator 7.1 or 7.2, preferably an end of the fixed part, is fixed to the main body 4 and a section of the movable part, preferably the free end of the movable part, is fixed to the corresponding side arm 6.1, 6.2, 6.1' or 6.2'. Thus, when the respective linear actuators 7.1 or 7.2 are extended the respective side pushers 5.1, 5.2, 5.1' or 5.2' are moved away from the tower 201 of the wind turbine (moving to the unlocked position) and when the actuators 7.1 or 7.2 are contracted the respective side pushers 5.1, 5.2, 5.1' or 5.2' are moved closer to the tower 201 (being able to move to the locked position).

As already mentioned, in the preferred embodiment of the main body 4 of each holding device 1, the latter comprises two lateral guide housings 8.1 and 8.2, said guide housings being inclined with respect to the axis of symmetry of the main body 4, as shown for example in figure 2. Each side arm 6.1, 6.2, 6.1' and 6.2' is guided in a respective guide housing 8.1 or 8.2 in such a way that the central pusher 5.3 or 5.3' is arranged between the two side arms 6.1 and 6.2, or 6.1' and 6.2'.

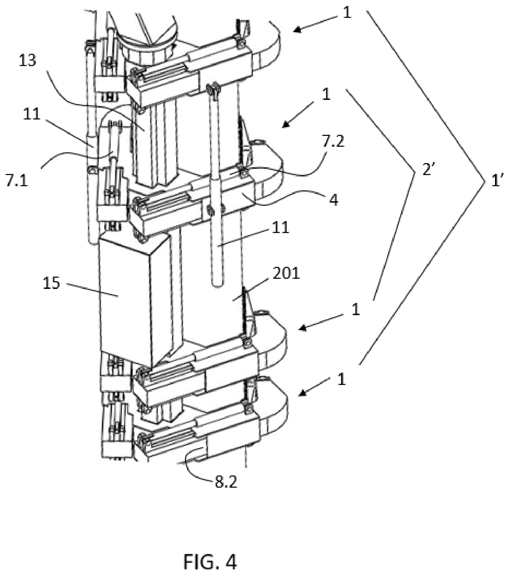

As shown in the non-limiting examples of figure 2 and 6, the side arms 6.1, 6.2, 6.1' and 6.2' of each holding device 1 are L-shaped, or inverted L-shaped, each side arm 6.1, 6.2, 6.1' or 6.2' comprising a main section 9 and a distal section 10 arranged at an angle to the main section 9. A portion of the main section 9 is housed within a respective guide housing 8.1 or 8.2, as shown in the detail of figure 4 or of figure 6, and the distal section 10, when the climbing structure 100 is in use, i.e. mounted on the tower 201 of the wind turbine, faces towards the tower 201. Each side pusher 5.1, 5.2, 5.1' or 5.2' of a respective holding device 1 is arranged at the end of the corresponding distal section 10, so that the respective(s) supporting surface(s) 3.1 or 3.2 can press against the tower 201. Thus, when the corresponding linear actuator 7.1 or 7.2 is actuated, the corresponding side arm 6.1, 6.2, 6.1' or 6.2' moves guided in the corresponding guide housing 8.1 or 8.2, so that both the distal end 10 and the corresponding side pusher 5.1, 5.2, 5.1' or 5.2' are moved away from or towards the tower 201 according to an axial direction 18.1 or 18.2 of the corresponding main section 9, thus being able to maintain the orientation of the side pushers 5.1, 5.2, 5.1' and 5.2' with respect to the corresponding central pusher 5.3, 5.3'.

In the preferred embodiment of the invention, the main section 9 and the distal section 10 of each side arm 6.1 or 6.2 are joined together and form a single piece, as shown in the non-limiting example of figure 2.

In another embodiment of the invention, the main section 9 and the distal section 10 of each side arm 6.1' or 6.2' are attached to each other but in such a way that the distal section 10 can rotate relative to the main section 9, as detailed further below.

In this embodiment, i.e. the embodiment in which the distal section 10 can rotate with respect to the main section 9, each side arm 6.1' or 6.2' comprises a pivot shaft 19 that joins the distal section 10 to the corresponding main section 9 so that it can rotate, and auxiliary actuating means 21 comprising at least one actuator configured to move said distal section 10 with respect to the corresponding main section 9, said actuator preferably being a linear actuator, and most preferably a hydraulic cylinder. In this way, it is possible to better adapt to the shape of the wind turbine tower 201, and it is also possible to increase the holding force of the corresponding holding device 1 to the tower 201.

On the other hand, the side pushers 5.1, 5.2, 5.1' or 5.2' may be articulated with respect to a pivot shaft 24 disposed at the distal section 10 of the corresponding side arm 6.1, 6.2, 6.1' or 6.2' so that the side pushers 5.1, 5.2, 5.1' or 5.2' can rotate, i.e. oscillate around the corresponding pivot shaft 24, and the central pusher 5.3 or 5.3' may also be articulated with respect to the main body 4.

In the example shown in figure 2, each pusher, the central pusher 5.3 and the side pushers 5.1 and 5.3, comprises a linear support body 22 with a corresponding longitudinal axis 16, a corresponding supporting surface 3.3, 3.1 and 3.2 being disposed at the end of each support body 22, with the longitudinal axes 16 of the side pushers 5.1 and 5.2 being angularly equally distributed with respect to the longitudinal axis 16 of the central pusher 5.3, preferably at 120°, while the corresponding holding device 1 is in the locking position.

In the example shown in figure 6, the pushers also press against the tower 201 in three angularly equally distributed areas. The supporting surfaces 3.3 of the pusher assembly of the central pusher 5.3' are arranged symmetrically with respect to the plane of symmetry 16', and each side pusher 5.1' and 5.2' comprises the non-linear support body 22', preferably in the shape of an inverted U, each support body 22' comprising a vertical plane of symmetry 23, so that, with the holding device 1 in the locking position, the planes of symmetry 23 of each side pusher 5.1', 5.2' and the plane of symmetry 16' of the central pusher 5.3' are arranged angularly equally distributed.

The side pushers 5.1' and 5.2' with the non-linear support body 22' allow the corresponding supporting surfaces 3.1, 3.2 to better adapt to the shape of the tower 201, as these pushers 5.1', 5.2' can oscillate, as already mentioned.

Likewise, in the embodiment where the side arms 6.1' and 6.2' comprise the pivot shaft 19, the side arms 6.1' and 6.2' also comprise locking means 20 comprising an actuator, preferably a linear actuator, configured to lock the distal section 10 with respect to the main section 9 when the corresponding side pusher 5.1' or 5.2' presses the tower 201 to secure the holding structure 100 to the tower 201 by means of the corresponding supporting surfaces 3.1 and 3.2.

Thus, in the locking position of the corresponding holding device 1, the actuator of the locking means 20 is activated, i.e. it is in the extended position, locking the distal section 10 with respect to the respective main section 9. Similarly, to unlock the corresponding holding device 1, the actuator of the locking means 20 is deactivated, i.e. it is in the retracted position or at least not in the extended position, allowing the distal section 10 to rotate with respect to the respective main section 9, thereby allowing the corresponding supporting surfaces 3.1 and 3.2 to move away from the tower 201 of the wind turbine.

In the embodiment where the central pusher 5.3 or 5.3' of each holding device 1 also moves, an end of the linear actuator which is configured to move the central pusher 5.3 or 5.3' is attached to the main body 4 and the other end is fixed directly to the central pusher 5.3 or 5.3'. However, in a variant of the invention the central pusher 5.3 or 5.3' could be arranged on a central arm, not shown in the drawings, so that an end of said linear actuator could be attached to the main body 4 and the other end to said central arm.

In this embodiment, i.e. in the embodiment where the central pusher 5.3 or 5.3' of each holding device also moves, the stroke of the linear actuators 7.1 and 7.2 associated with the side arms 6.1, 6.2, 6.1' and 6.2' may be greater than the stroke of the linear actuator associated with the central pusher 5.3 or 5.3'.

As shown in Figure 1, the climbing structure 100;100' may comprise a crane 12, preferably at the top, for handling and lifting large, bulky and/or heavy parts, which facilitates the assembly and maintenance work of the wind turbine. The crane 12 may be attached to one of the holding devices 1 of the climbing structure 100; 100' or the climbing structure 100; 100' may comprise a platform, not shown in the drawings, on which the crane 12 is arranged.

As already discussed, the climbing structure 100; 100' of the invention comprises at least two holding devices 1 arranged at different heights with respect to the tower 201. Both holding devices 1 are structurally the same, i.e. they comprise the same elements and are configured to be secured to the tower 201 in the same way.

In order for the climbing structure 100; 100' to be able to climb the tower 201 of the wind turbine the holding devices 1 are configured to be able to be secured to a portion of the corresponding tower 201 alternatively through the corresponding supporting surfaces 3.1, 3.2 and 3.3, without the need to add specific anchors to the tower 201. Both holding devices 1 are coupled to each other by means of at least one linear actuator 11, preferably a hydraulic cylinder, and more preferably double acting hydraulic cylinder although in this case it could also be single acting one since the force of gravity can be used, so that when one holding device 1 is in the locked position the other device 1 is in the unlocked position so that said device 1 can move with the help of the linear actuator 11 with respect to the holding device 1 which is in the locked position. The linear actuator 11 comprises a fixed part and a movable part (which moves relative to the fixed part), so that the fixed part of the linear actuator 11 is fixed to the main body 4 of the first holding device 1 and the movable part to the main body 4 of the second holding device 1, as can be seen for example in the detail of figure 4. In a variant of the invention both holding devices 1 are coupled to each other by means of two linear actuators 11 which are arranged on each side of the climbing structure 100; 100', or more specifically on the sides of each main body 4.

However, in the non-limiting example shown in the figures, the climbing structure 100; 100' of the invention comprises four holding devices 1 arranged at different heights with respect to the tower 201, two of the holding devices 1 forming a first holding assembly 1' and the others a second holding assembly 2'. In this example all the holding devices 1 are also structurally the same. The holding devices 1 of the second holding assembly 2' are arranged between the holding devices 1 of the first holding assembly 1'.

Both holding assemblies 1' and 2' are coupled to each other by means of at least one linear actuator 11, preferably a hydraulic cylinder, although in the non-limiting example of the figures both holding assemblies 1' and 2' are coupled by means of two linear actuators 11 arranged on each side of the climbing structure 100; 100', or more specifically on the sides of each main body 4, as can be seen for example in figures 2, 4 or 5B. As shown in said figures, the upper holding devices 1 of each holding assembly 1' and 2' are the ones which are coupled via said linear actuators 11.

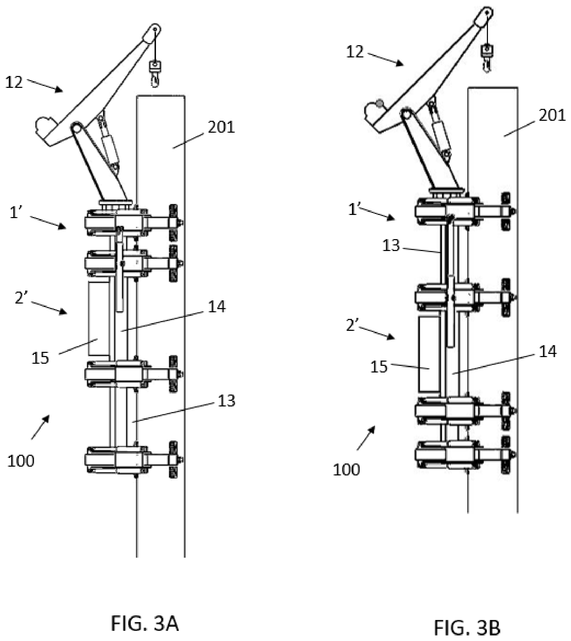

The holding devices 1 of each holding assembly 1' and 2' are synchronized such that both holding assemblies 1' and 2' are configured to alternately secure to the tower 201 during use of the climbing structure 100; 100'. Figure 3A for example, shows a side view of the climbing structure 100 in a position of use wherein the linear actuators 11, configured to move the climbing structure 100 in the direction of the longitudinal axis of the tower 201, are contracted so that the upper holding device 1 of the second holding assembly 2' is approached towards the upper holding device 1 of the first holding assembly 1'. In figure 3B instead, a side view of the climbing structure 100 is shown in another position of use wherein said linear actuators 11 are extended so that the upper holding device 1 of the first holding assembly 1' is moved away from the upper holding device 1 of the second holding assembly 2'. This sequence of figures shows the process of climbing upwards the climbing structure 100. If the climbing structure 100 is to be moved downwards, the order of operations is reversed. Needless to say, the method of climbing up and down the climbing structure 100 described in the example of figures 3A and 3B, is applicable to the structure 100' of figures 5A to 6.

In the embodiment of the invention with four holding devices 1, the first holding assembly 1' comprises a main column 13 joining together the main bodies 4 of the respective holding devices 1, so that the holding devices 1 of the first holding assembly 1' being in the unlocked position, if the upper holding device 1 is moved, the lower holding device 1 will also move in the same proportion and direction pulled by the corresponding upper holding device 1. The holding devices 1 of the second holding assembly 2' are guided in said main column 13 and said main column 13 is housed and fixed in a respective housing 4' of each main body 4 of the first holding assembly 1'.

Likewise, the second holding assembly 2' comprises a second column 14 joining together the main bodies 4 of the respective holding devices1, so that with the holding devices 1 of the second holding assembly 2' being in the unlocked position, if the upper holding device 1 is moved, the lower holding device 1 will also move in the same proportion and direction pulled by the corresponding upper holding device 1. The second column 14 is housed and fixed in a respective housing 4' of each main body 4 of the second holding assembly 2' but in this case, the second column 14 is traversed by the main column 13 so that the second column 14 can slide along the main column 13.

While the crane 12 is working and it is not necessary to move the climbing structure 100; 100' upwards or downwards, all holding devices 1 of the climbing structure 100; 100' may be in the locked position to further increase the attachment to the tower 201.

On the other hand, in order to increase the load capacity of the crane (so that it is capable of supporting higher loads), the climbing structure 100; 100' could be provided with more holding devices 1 to increase the rigidity of the climbing structure 100; 100', in which case, each holding assembly 1' and 2' could comprise two, three, four or more holding devices 1, the holding devices 1 of the same holding assembly moving synchronously. Needless to say, the climbing structure 100; 100' of the invention can climb upwards the tower 201, away from the ground, as well as move downwards, towards the ground.

The climbing structure 100; 100' of the invention also comprises a control unit and a hydraulic system arranged in a casing 15, as shown in the detail of figure 4 or of figure 5A, to ensure the correct operation of the climbing structure 100; 100'. The climbing structure 100; 100' can be remotely controlled by a user.

## Claims

1. Climbing structure for wind turbines, comprising at least two holding devices (1) for securing the structure (100; 100') to a tower (201) of a wind turbine, each holding device (1) comprising three pushers, a central one (5.3; 5.3') and two side pushers (5.1, 5.2; 5.1', 5.2'), with at least a respective supporting surface (3.1, 3.2, 3.3), the pushers being configured to press the tower (201) at a certain height on three angularly equally distributed areas by means of the supporting surfaces (3.1, 3.2, 3.3), a main body (4) and side arms (6.1, 6.2; 6.1', 6.2') cooperating with said main body (4) and comprising a respective side pusher (5.1, 5.2; 5.1', 5.2'), the central pusher (5.3; 5.3') being associated with the main body (4), **characterised in that** the main body (4) of each of the holding device (1) comprises two inclined side guide housings (8.1, 8.2), the central pusher (5.3; 5.3') being arranged between both side arms (6.1, 6.2; 6.1', 6.2'), and each holding device (1) comprises actuating means for moving the side arms (6.1, 6.2; 6.1', 6.2') with respect to the main body (4) guided in the corresponding side guide housing (8.1, 8.2), such that the respective holding device (1) can be coupled to towers of different diameters.

2. Climbing structure according to claim 1, wherein the actuation means of each holding device 1 are configured to move the side pushers (5.1, 5.2; 5.1', 5.2') independently, preferably by means of at least one respective linear actuator (7.1, 7.2), said linear actuator (7.1, 7.2) being preferably a hydraulic cylinder.

3. Climbing structure according to claim 2, wherein each linear actuator (7.1, 7.2) comprises a fixed part and a movable part that moves relative to the fixed part, with a section of the fixed part of each linear actuator (7.1, 7.2) being attached to the corresponding main body (4), and with a section of the movable part being attached to the corresponding side arm (6.1, 6.2; 6.1', 6.2').

4. Climbing structure according to any of the preceding claims, wherein the side arms (6.1, 6.2; 6.1', 6.2') of each holding device (1) are L-shaped, each side arm (6.1, 6.2; 6.1', 6.2') comprising a main section (9) and a distal section (10) which in use is oriented towards the tower (201) of the wind turbine, the corresponding side pusher (5.1, 5.2; 5.1', 5.2') being arranged at the end of the corresponding distal section (10), and a portion of said main section (9) being housed and guided in the respective side guide housing (8.1, 8.2).

5. Climbing structure according to claim 4, wherein the main section (9) and the distal section (10) of each side arm (6.1, 6.2) are attached to each other and form a single piece.

6. Climbing structure according to claim 4, wherein the main section (9) and the distal end (10) of each side arm (6.1', 6.2') are attached to each other such that the distal end (10) can rotate relative to the main section (9).

7. Climbing structure according to claim 6, wherein each lateral arm (6.1', 6.2') comprises a pivot shaft (19) connecting rotatably the distal end (10) to the corresponding main section (9), and auxiliary actuating means (21) comprising an actuator configured to move said distal end (10) with respect to the corresponding main section (9), said actuator preferably being a linear actuator, and most preferably a hydraulic cylinder.

8. Climbing structure according to claim 6 or 7, wherein each side arm (6.1', 6.2') comprises locking means (20) comprising an actuator, preferably a linear actuator, configured to block the distal end (10) with respect to the main section (9) when the corresponding side pusher (5.1', 5.2') presses the tower (201) to secure the structure (100') to the tower (201), and which allow the distal end (10) to rotate with respect to the main section (9) otherwise.

9. Climbing structure according to any of the preceding claims, wherein the side pushers (5.1, 5.2; 5.1', 5.2') are articulated with respect to the distal end (10) of the corresponding lateral arm (6.1, 6.2; 6.1', 6.2'), and the central pusher (5.3; 5.3') may also be articulated with respect to the main body (4).

10. Climbing structure according to any of the preceding claims, wherein the side arms (6.1, 6.2; 6.1' , 6.2') are arranged symmetrically with respect to a plane (17; 16') comprising a longitudinal axis of the tower (201) and a transverse axis of the tower (201) perpendicular to the longitudinal axis, the transverse axis being able to be aligned with a longitudinal axis (16) of the central pusher (5.3).

11. Climbing structure according to any of the preceding claims, wherein the actuating means of each holding device (1) comprises at least one actuator configured to move the central pusher (5.3; 5.3') with respect to the main body (4), said actuator being preferably a linear actuator, and most preferably a hydraulic cylinder.

12. Climbing structure according to any of the preceding claims, wherein the two holding devices (1) are arranged at different heights, both holding devices (1) being coupled to each other by means of at least one linear actuator (11), preferably a hydraulic cylinder, such that the holding devices (1) are configured to alternately hold on to the tower (201), through the corresponding pushers that press the tower (201), the central one (5.3; 5.3') and the side pushers (5.1, 5.2; 5.1', 5.2'), to climb the tower (201) during use of the climbing structure (100; 100').

13. Climbing structure according to claim 12, wherein the structure (100; 100') comprises four holding devices (1) arranged at different heights in relation to the tower 201, two of the holding devices (1) forming a first holding assembly (1') and the other two forming a second holding assembly (2'), the holding devices (1) of the second holding assembly (2') being arranged between the holding devices (1) of the first holding assembly (1'), both holding devices (1', 2') being coupled together by at least one linear actuator (11), preferably a hydraulic cylinder, the holding devices (1) of each holding device (1', 2') being synchronized so that both holding devices (1', 2') are configured to alternately hold on to the tower (201) for climbing the tower (201) during use of the climbing structure (100; 100').

14. Climbing structure according to claim 13, wherein the first holding assembly (1') comprises a main column (13) which joins together the main bodies (4) of the respective holding devices (1), the holding devices (1) of the second holding assembly (2') being guided in said main column (13), and wherein the second holding assembly (2') comprises a second column (14) which joins together the main bodies (4) of the respective holding devices (1), said second column (14) also being guided in the main column (13).

15. Climbing structure according to any of the preceding claims, comprising a crane (12).
